# EUROPEAN PATENT APPLICATION

(11) **EP 3 288 052 A1**
(43) Date of publication of application: **28.02.2018**
(21) Application number: 17796009.3
(22) Date of filing: 28.04.2017
(51) Int. Cl.: H01G 9/20

(54) **DYE-SENSITIZED SOLAR CELL HAVING HIGH CONVERSION EFFICIENCY**

(30) Priority: 12.05.2016 JP 2016096200
(71) Applicant: Showa Co., Ltd., Ikoma-shi, Nara 630-0142 (JP)
(72) Inventor: TAKAYASU, Teruki, Ikoma-shi Nara 630-0142 (JP); ONODA, Kinji, Ikoma-shi Nara 630-0142 (JP)
(74) Representative: Vossius & Partner Patentanwälte Rechtsanwälte mbB
(86) International application number: PCT/JP2017/016891
(87) International publication number: WO 2017/195648

(57) **Abstract**

Provided is a dye-sensitized solar cell having high conversion efficiency. The dye-sensitized solar cell is a dye-sensitized solar cell in which a photoelectrode and a counter electrode are disposed opposite to each other via an electrolyte layer; (1) the photoelectrode comprising a titanium material, a blocking layer formed on the titanium material, and a porous titanium oxide layer containing a dye sensitizing agent formed on the blocking layer; and (2) the counter electrode comprising a transparent conductive glass or transparent conductive film coated with an electrochemical-reduction catalyst layer.

## Description

### Technical Field

The present invention relates to a dye-sensitized solar cell.

### Background Art

There are various types of solar cells, including monocrystal, polycrystal, and amorphous silicon solar cells, CIGS, CdTe, GaAs, and other compound semiconductor solar cells, organic thin film solar cells, dye-sensitized solar cells, and the like.

Silicon solar cells are currently mainstream. However, silicon solar cells require high-purity silicon materials. Moreover, the production of silicon solar cells requires a high temperature and a high vacuum, causing high production costs. Thus, there is room for improvement in this respect.

Under such circumstances, dye-sensitized solar cells have recently been attracting attention. Dye-sensitized solar cells can be easily produced because of their simple structure, and there are many constituent materials thereof. Moreover, dye-sensitized solar cells can be produced at a low cost, and have high photoelectric conversion efficiency. For these reasons, dye-sensitized solar cells have been attracting attention as next-generation solar cells.

A dye-sensitized solar cell can be constructed by a simple method in which an electrolyte solution having reversible electrochemical redox characteristics is injected between a photoelectrode and a counter electrode, and the photoelectrode and the counter electrode are sealed and wire-connected.

The photoelectrode is conventionally produced in the following manner.

First, a paste agent containing titanium oxide particles is coated on the surface of transparent conductive glass, which is a glass substrate on which a transparent conductive film, such as ITO (indium tin oxide) or FTO (fluorine tin oxide), is formed. Then, the obtained coated product is heated at a temperature of 400 to 500°C, thereby producing an electrode having a porous titanium oxide layer that is a semiconductor layer.

Subsequently, the obtained electrode is immersed in an organic solution containing a dye sensitizing agent, such as ruthenium-based dye or indoline-based dye, thereby producing a photoelectrode in which the dye sensitizing agent is adsorbed to the surface of the porous titanium oxide.

Next, the counter electrode is generally produced by forming a platinum layer having an electrochemical reduction action by sputtering, etc., on a glass substrate or film on which a transparent conductive film is formed.

Excited electrons generated from the photo-absorbed dye move to the photoelectrode substrate through the porous titanium oxide layer to which the dye is adsorbed. The excited electrons moved to the photoelectrode move to the counter electrode via an external circuit. The excited electrons moved to the counter electrode reduce the electrolyte solution. In contrast, the dye, which has released electrons and been in an oxidation state, oxidizes the electrolyte solution.

The dye-sensitized solar cell generates electricity by repeating this series of flow. In the process of moving to the photoelectrode substrate through the porous titanium oxide layer to which the dye is adsorbed, the excited electrons generated from the dye recombine with the dye in an oxidation state, or undergo reverse transfer from the surface of the photoelectrode substrate in contact with the electrolyte solution to the electrolyte solution side. As a result, there was a problem that conversion efficiency was reduced.

In order to solve this problem, a technique to form a block layer on the photoelectrode substrate is proposed. The block layer prevents reverse electron transfer from the surface of the photoelectrode substrate in contact with the electrolyte solution to the electrolyte solution side.

For example, PTL 1 discloses a technique to improve the conversion efficiency of a dye-sensitized solar cell by using a technique to coat a photoelectrode substrate, which is a glass substrate coated with a transparent conductive film, with an oxide, such as niobium oxide, magnesium oxide, or aluminium oxide.

However, there was a problem that the conversion efficiency was improved only from 3.47% to about 4.48% even when such treatment was performed. The reason for this is because, in conventional dye-sensitized solar cells, the electrical resistance of the transparent conductive film that forms the photoelectrode is relatively high.

As a result, there was a problem that the conversion efficiency was only slightly improved even when a block layer was formed on the transparent conductive film.

### Citation List

### Patent Literature

PTL 1: JP2008-077924A

### Summary of Invention

### Technical Problem

An object of the present invention is to provide a dye-sensitized solar cell having high photoelectric conversion efficiency.

### Solution to Problem

As a result of intensive studies to solve the problems of the prior art, the present inventor found that the above object can be achieved by a dye-sensitized solar cell having a specific structure.

Specifically, the present invention relates to the following dye-sensitized solar cells.

### Item 1:

A dye-sensitized solar cell in which a photoelectrode and a counter electrode are disposed opposite to each other via an electrolyte layer;
(1) the photoelectrode comprising a titanium material, a blocking layer formed on the titanium material, and a porous titanium oxide layer containing a dye sensitizing agent formed on the blocking layer, and
(2) the counter electrode comprising a transparent conductive glass or transparent conductive film coated with an electrochemical-reduction catalyst layer.

### Item 2:

The dye-sensitized solar cell according to Item 1, wherein the titanium material is a material selected from the group consisting of metal titanium, titanium alloys, surface-treated metal titanium, and surface-treated titanium alloys.

### Item 3:

The dye-sensitized solar cell according to Item 1 or 2, wherein the electrochemical-reduction catalyst layer is a platinum catalyst layer.

### Item 4:

The dye-sensitized solar cell according to any one of Items 1 to 3, wherein the blocking layer comprises at least one material layer selected from the group consisting of a layer of titanium oxide, a layer of aluminium oxide, a layer of silicon oxide, a layer of zirconium oxide, a layer of strontium titanate, a layer of magnesium oxide, and a layer of niobium oxide.

### Item 5:

The dye-sensitized solar cell according to any one of Items 1 to 3, wherein the blocking layer comprises at least two layers selected from the group consisting of a layer of titanium oxide, a layer of aluminium oxide, a layer of silicon oxide, a layer of zirconium oxide, a layer of strontium titanate, a layer of magnesium oxide, and a layer of niobium oxide.

### Item 6:

The dye-sensitized solar cell according to any one of Items 1 to 3, wherein the blocking layer comprises at least two layers selected from the group consisting of a layer of titanium oxide, a layer of aluminium oxide, and a layer of niobium oxide.

### Item 7:

A dye-sensitized solar cell in which a photoelectrode and a counter electrode are disposed opposite to each other via an electrolyte layer;
(1) the photoelectrode comprising a titanium material, a blocking layer formed on the titanium material, and a porous titanium oxide layer containing a dye sensitizing agent formed on the blocking layer, and
(2) the counter electrode comprising a transparent conductive glass or transparent conductive film coated with an electrochemical-reduction catalyst layer;
wherein the blocking layer comprises at least two layers selected from the group consisting of a layer of titanium oxide, a layer of aluminium oxide, a layer of silicon oxide, a layer of zirconium oxide, a layer of strontium titanate, a layer of magnesium oxide, and a layer of niobium oxide, and
a layer of aluminium oxide is always formed on the titanium material (on the titanium material side) of the blocking layer.

### Item 8:

The dye-sensitized solar cell according to Item 7, wherein the titanium material is a material selected from the group consisting of metal titanium, titanium alloys, surface-treated metal titanium, and surface-treated titanium alloys.

### Item 9:

The dye-sensitized solar cell according to Item 7 or 8, wherein the electrochemical-reduction catalyst layer is a platinum catalyst layer.

### Item 10:

The dye-sensitized solar cell according to any one of Items 7 to 9, wherein the blocking layer comprises at least two layers selected from the group consisting of a layer of titanium oxide, a layer of aluminium oxide, and a layer of niobium oxide.

### Item 11:

A method for producing the dye-sensitized solar cell according to any one of Items 1 to 10, wherein the titanium material of the photoelectrode is produced by the following surface treatment method comprising the steps of:
(1) forming titanium nitride on the surface of a metal titanium material or titanium material; and
(2) anodizing the metal titanium material or titanium alloy material with the titanium nitride formed on the surface thereof obtained in step (1) using an electrolyte solution that has an etching effect on titanium at a voltage equal to or higher than spark discharge generating voltage, thereby forming an anatase-type titanium oxide film.

### Item 12:

A method for producing the dye-sensitized solar cell according to any one of Items 1 to 10, wherein the titanium material of the photoelectrode is produced by the following surface treatment method comprising the steps of:
(1) forming titanium nitride on the surface of a metal titanium material or titanium material;
(2) anodizing the metal titanium material or titanium alloy material with the titanium nitride formed on the surface thereof obtained in step (1) using an electrolyte solution that does not have an etching effect on titanium; and
(3) heating the anodized metal titanium material or titanium alloy material obtained in step (2) in an oxidizing atmosphere, thereby forming an anatase-type titanium oxide film.

### Item 13:

The production method according to Item 11 or 12, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

### Item 14:

The production method according to Item 13, wherein the heat treatment under a nitrogen gas atmosphere is performed in the presence of an oxygen-trapping agent.

### Advantageous Effects of Invention

The dye-sensitized solar cell of the present invention comprises a photoelectrode substrate that is made of a titanium material, and that is further provided with a blocking layer; therefore, a dye-sensitized cell having remarkably high photoelectric conversion efficiency can be realized.

The blocking layer can prevent leakage of electrons to the electrolyte solution layer at the interface of the photoelectrode and the photoelectrode substrate, and suppress the reunion of the electrons with the dye sensitizing agent.

Due to the blocking layer, in the process of moving to the photoelectrode substrate through the porous titanium oxide layer to which the dye is adsorbed, the excited electrons generated from the dye neither recombine with the dye in an oxidation state, nor undergo reverse transfer from the surface of the photoelectrode substrate in contact with the electrolyte solution to the electrolyte solution side.

Consequently, the photoelectric conversion efficiency of the dye-sensitized solar cell having a blocking layer is increased.

### Brief Description of Drawing

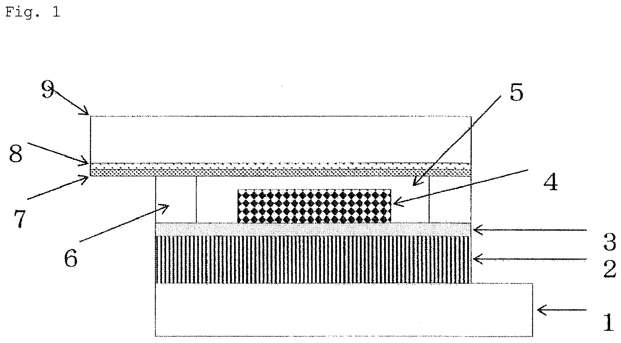

Fig. 1 is a schematic view (cross-sectional view) showing one embodiment of the dye-sensitized solar cell of the present invention.

### Description of Embodiments

The present invention is described in detail below.

In the present specification, materials selected from the group consisting of metal titanium, titanium alloys, surface-treated metal titanium, and surface-treated titanium alloys are also referred to as simply "titanium materials."

In the dye-sensitized solar cell of the present invention, a photoelectrode and a counter electrode are disposed opposite to each other via an electrolyte layer;
(1) the photoelectrode comprising a titanium material, a blocking layer formed on the titanium material, and a porous titanium oxide layer containing a dye sensitizing agent formed on the blocking layer; and
(2) the counter electrode comprising a transparent conductive glass or transparent conductive film coated with an electrochemical-reduction catalyst layer.

The blocking layer prevents leakage of electrons to the electrolyte solution layer at the interface of the photoelectrode and the photoelectrode substrate, and suppresses the reunion of the electrons with the dye sensitizing agent.

Since the photoelectrode of the dye-sensitized solar cell of the present invention is made of a titanium material that does not transmit light, light is irradiated from the counter electrode side.

The dye-sensitized solar cell of the present invention comprises the following members.

### (1) Photoelectrode

In the dye-sensitized solar cell, a photoelectrode and a counter electrode are disposed opposite to each other via an electrolyte layer. The photoelectrode is obtained by forming a titanium oxide layer containing a dye sensitizing agent on a material selected from the group consisting of metal titanium, titanium alloys, surface-treated metal titanium, and surface-treated titanium alloys (hereinafter also referred to as "titanium material"; photoelectrode substrate).

### Photoelectrode Substrate

A titanium material itself can be used as the photoelectrode substrate. A titanium material serves as a substrate.

Metal titanium material is titanium itself. When a titanium alloy material is used, its type is not particularly limited. Examples of titanium alloys include Ti-6Al-4V, Ti-4.5Al-3V-2Fe-2Mo, Ti-0.5Pd, Ti-Ni, Ti-5Al-2.5Sn, Ti-8Al-1Mo-1V, Ti-3Al-2.5V, Ti-6Al-6V-2Sn, Ti-6Al-2Sn-4Zr-6Mo, Ti-3Al-2.5V-6Cr-4Zr-4Mo, Ti-10V-2Fe-3Al, Ti-15V-3Cr-3Sn-3Al, Ti-5Al-1Fe, Ti-0.5Cu, Ti-1Cu, Ti-1Cu-0.5Nb, Ti-3Al-5V, Ti-20V-4Al-1Sn, Ti-22V-4Al, and the like.

The photoelectrode substrate is preferably one in which a titanium material is treated by the following surface treatment method A or B to form an anatase-type titanium oxide film, which serves as a semiconductor layer, on the surface of the titanium material, because when electrons generated due to light excitation of the dye sensitizing agent are transferred from the titanium oxide layer to the photoelectrode substrate, reverse electron transfer, such as leakage of the electrons into the electrolyte solution layer, is prevented.

The anatase-type titanium oxide film serves as a semiconductor layer.

When metal titanium or a titanium alloy is used as the photoelectrode substrate, a paste agent containing titanium oxide particles is coated in the formation of a titanium oxide layer (semiconductor layer) containing a dye sensitizing agent.

Subsequently, a step of performing heat treatment of the obtained coated product at a temperature of 400 to 500°C is performed. In the step of heat treatment at a temperature of 400 to 500°C, a titanium oxide layer is formed on the surface of the metal titanium or titanium alloy. This titanium oxide layer can also prevent reverse electron transfer, such as leakage of the electrons into the electrolyte solution layer.

Further, it was found that a dye-sensitized cell having remarkably high photoelectric conversion efficiency can be realized by further providing a blocking layer on a photoelectrode substrate made of a titanium material, because, for example, leakage of electrons to the electrolyte solution layer is prevented when the electrons are transferred to the photoelectrode substrate, and reverse electron transfer to the dye sensitizing agent is prevented to suppress the reunion of the electrons with the dye sensitizing agent. Thus, the present invention has been completed.

The thickness of the photoelectrode substrate is generally about 0.01 to 10 mm, preferably about 0.01 to 5 mm, and more preferably about 0.05 to 1 mm.

### Surface Treatment Method A

The photoelectrode substrate (titanium material for the photoelectrode) is preferably a photoelectrode substrate having a semiconductor layer containing anatase-type titanium oxide on the surface thereof, produced by the following surface treatment method comprising the steps of:
(1) forming titanium nitride on the surface of a metal titanium material or titanium alloy material; and
(2) anodizing the metal titanium material or titanium alloy material with titanium nitride formed on the surface thereof obtained in step (1) using an electrolyte solution that has an etching effect on titanium at a voltage equal to or higher than the spark discharge generating voltage, thereby forming an anatase-type titanium oxide film.

### Surface Treatment Method B

The photoelectrode substrate (titanium material for the photoelectrode) is preferably a photoelectrode substrate having a semiconductor layer containing anatase-type titanium oxide on the surface thereof, produced by the following surface treatment method comprising the steps of:
(1) forming titanium nitride on the surface of a metal titanium material or titanium alloy material;
(2) anodizing the metal titanium material or titanium alloy material with titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

### Step (1) of Surface Treatment Methods A and B

In the step of forming titanium nitride on the surface of a titanium material (metal titanium or titanium alloy) (step (1)), a layer of titanium nitride generally with a thickness of about 0.1 to 100 µm can be formed on the surface of a titanium material.

The thickness of the titanium nitride layer is preferably about 0.5 to 50 µm, and more preferably about 1 to 10 µm.

The means for forming titanium nitride on the surface of a titanium material is not particularly limited. For example, titanium nitride is physically or chemically attached to the surface of a titanium material, or titanium and nitrogen are reacted on the surface of a titanium material to thereby form titanium nitride.

The step of forming titanium nitride is preferably performed by one treatment method selected from the group consisting of PVD (physical vapor deposition) treatment, CVD (chemical vapor deposition) treatment, spraying treatment (film formation by spraying), heat treatment under an ammonia gas atmosphere, and heat treatment under a nitrogen gas atmosphere.

Examples of the PVD treatment include ion plating, sputtering, and the like. Examples of the CVD treatment include thermal CVD treatment, plasma CVD treatment, laser CVD treatment, and the like. Examples of the spraying treatment include flame spraying, arc spraying, plasma spraying, laser spraying, and the like.

The heating temperature of the heat treatment under an ammonia gas or nitrogen gas atmosphere is preferably about 500°C or more, more preferably about 750 to 1,050°C, and even more preferably about 750°C to 950°C. It is preferable to heat a titanium material generally at about 500°C or more (preferably about 750°C or more) under a nitrogen gas atmosphere.

The heat treatment under an ammonia gas or nitrogen gas atmosphere is preferably performed in the presence of an oxygen-trapping agent.

It is particularly preferable to form titanium nitride by performing heat treatment under a nitrogen gas atmosphere in the presence of an oxygen-trapping agent.

The oxygen-trapping agent used in the heat treatment of a titanium material is, for example, a substance or gas having a higher oxygen affinity than that of the titanium material. For example, a carbon material, metal powder, hydrogen gas, etc., can be preferably used. These oxygen-trapping agents may be used singly or in a combination of two or more.

Examples of carbon materials include, but are not particularly limited to, graphite carbon, amorphous carbon, carbon having an intermediate crystal structure between graphite carbon and amorphous carbon, and the like. The carbon material may have any shape, such as plate, foil, or powder.

It is preferable to use a plate carbon material, in terms of handling properties, and because the thermal strain of the titanium material during heat treatment can be prevented.

Examples of metal powders include, but are not particularly limited to, metal powders of titanium, a titanium alloy, chromium, a chromium alloy, molybdenum, a molybdenum alloy, vanadium, a vanadium alloy, tantalum, a tantalum alloy, zirconium, zirconium, a zirconium alloy, silicon, a silicon alloy, aluminum, an aluminum alloy, or the like.

It is preferable to use a metal powder of titanium, a titanium alloy, chromium, a chromium alloy, zirconium, a zirconium alloy, aluminum, an aluminum alloy, or the like, because their oxygen affinity is high. The most preferable metal powder is a metal powder of titanium particles or a titanium alloy. These metal powders may be used singly or in a combination of two or more.

The average particle diameter of the metal powder is preferably about 0.1 to 1,000 µm, more preferably about 0.1 to 100 µm, and even more preferably about 0.1 to 10 µm.

The conditions for using an oxygen-trapping agent in an ammonia gas or nitrogen gas atmosphere can be suitably determined depending on the type and shape of the oxygen-trapping agent.

When a carbon material or metal powder is used as the oxygen-trapping agent, a titanium material is brought into contact with the carbon material or metal powder so that the surface of the titanium material is covered with the carbon material or metal powder. Then, the titanium material is heated in an ammonia gas or nitrogen gas atmosphere.

When hydrogen gas is used as the oxygen-trapping agent, the titanium material is heated while hydrogen gas is introduced under an ammonia gas or nitrogen gas atmosphere.

The heat treatment can be performed in an atmosphere of ammonia gas, nitrogen gas, or a mixed gas of ammonia gas and nitrogen gas. It is most preferable to use nitrogen gas, in terms of convenience, profitability, and safety.

The reaction pressure of the heat treatment under an ammonia gas or nitrogen gas atmosphere is about 0.01 to 100 MPa, preferably about 0.1 to 10 MPa, and more preferably about 0.1 to 1 MPa. The heat treatment is preferably performed under a nitrogen gas atmosphere.

The heating time of the heat treatment under an ammonia gas or nitrogen gas atmosphere is preferably about 1 minute to 12 hours, more preferably about 10 minutes to 8 hours, and even more preferably about 1 hour to 6 hours. It is preferable to heat the titanium material for this period of time.

When a titanium material is heated under an ammonia gas or nitrogen gas atmosphere, it is preferable, in order to efficiently form titanium nitride on the surface of the titanium material, to reduce the pressure in the furnace for heat treatment using a rotary-type vacuum pump and optionally a mechanical booster pump or an oil diffusion pump, and to reduce the concentration of oxygen remaining in the furnace for heat treatment (in the nitriding furnace).

Titanium nitride can be efficiently formed on the surface of a titanium material by reducing the pressure in the furnace for heat treatment to preferably about 10 Pa or less, more preferably about 1 Pa or less, and even more preferably about 0.1 Pa or less.

Titanium nitride can be efficiently formed on the surface of a titanium material by supplying ammonia gas, nitrogen gas, or a mixed gas of ammonia gas and nitrogen gas, into the decompressed furnace to return the pressure in the furnace, and heating the titanium material.

The heating temperature, heating time, and other conditions of the heat treatment using this furnace may be the same as the above-mentioned conditions. As the gas composition, it is most preferable to use nitrogen gas, in terms of convenience, profitability, and safety.

Titanium nitride can be more efficiently formed on the surface of a titanium material by alternately repeating (several times) the decompression treatment that reduces the remaining oxygen concentration in the furnace for heat treatment, and the pressure-returning treatment that supplies nitrogen gas, etc., into the furnace. Furthermore, titanium nitride can be more efficiently formed on the surface of a titanium material by performing decompression treatment in the presence of an oxygen-trapping agent, and heat treatment under a gas atmosphere, such as ammonia gas or nitrogen gas.

The type of titanium nitride formed on the surface of a titanium material is not particularly limited. Examples thereof include TiN, Ti₂N, α-TiN_{0.3}, η-Ti₃N₂₋ₓ, ξ-Ti₄N₃₋ₓ (provided that X is 0 or more and less than 3), mixtures thereof, amorphous titanium nitride, and the like.

Preferred among these are TiN, Ti₂N, and mixtures thereof; more preferred are TiN, and a mixture of TiN and Ti₂N; and particularly preferred is TiN.

As the means for forming titanium nitride in the present invention, one of the above methods may be used singly, or two or more of them may be used in combination. Of the above methods for forming titanium nitride, heat treatment of a titanium material under a nitrogen gas atmosphere is preferred in terms of convenience, mass production, or production cost.

### Step (2) of Surface Treatment Method A

In surface treatment method A, the titanium material with titanium nitride formed on the surface thereof is anodized using an electrolyte solution that has an etching effect on titanium at a voltage equal to or higher than the spark discharge generating voltage, thereby forming an anatase-type titanium oxide film (step (2)).

The produced photoelectrode substrate has an anatase-type titanium oxide-containing semiconductor layer on the surface thereof. An anatase-type titanium oxide film can be suitably formed by performing anodization. Due to the formation of an anatase-type titanium oxide film, high photoelectric conversion efficiency can be suitably exhibited.

In the surface treatment using a method of applying a voltage equal to or higher than the spark discharge generating voltage, an electrolyte solution that has an etching effect on titanium materials is preferably used. The electrolyte solution preferably contains an inorganic acid and/or organic acid that have an etching effect on titanium. The electrolyte solution preferably further contains hydrogen peroxide.

It is preferable to perform anodization by applying a voltage equal to or higher than the spark discharge generating voltage.

As the electrolyte solution, it is preferable to use an aqueous solution containing an inorganic acid and/or organic acid that have an etching effect on titanium materials.

Examples of the inorganic acid that has an etching effect on titanium materials include sulfuric acid, hydrofluoric acid, hydrochloric acid, nitric acid, aqua regia, and the like. Examples of the organic acid that has an etching effect on titanium include oxalic acid, formic acid, citric acid, trichloroacetic acid, and the like.

These acids may be used singly, or in a combination of any two or more regardless of whether they are organic acids or inorganic acids.

A preferable embodiment of an electrolyte solution containing two or more acids is, for example, an aqueous solution containing sulfuric acid and optionally phosphoric acid. Although the proportion of the acids in this electrolyte solution varies depending on the type of acid used, anodization conditions, and other conditions, the total amount of the acids is generally 0.01 to 10 M, preferably 0.1 to 10 M, and more preferably 1 to 10 M.

An example of an electrolyte solution containing sulfuric acid and phosphoric acid is an electrolyte solution containing 1 to 8 M sulfuric acid and 0.1 to 2 M phosphoric acid.

The electrolyte solution preferably contains hydrogen peroxide, in addition to the above organic acid and/or inorganic acid. The electrolyte solution containing hydrogen peroxide allows more efficient production of an anatase-type titanium oxide film.

When the electrolyte solution contains hydrogen peroxide, the proportion of hydrogen peroxide is not particularly limited, but is, for example, 0.01 to 5 M, preferably 0.01 to 1 M, and more preferably 0.1 to 1 M.

A preferable embodiment of the electrolyte solution used in the anodization is, for example, an aqueous solution containing 1 to 8 M sulfuric acid, 0.1 to 2 M phosphoric acid, and 0.1 to 1 M hydrogen peroxide.

An anatase-type titanium oxide film is obtained by immersing a titanium material in the above electrolyte solution, and performing anodization by applying a constant current so that a voltage equal to or higher than the spark discharge generating voltage is applied. For example, the voltage equal to or higher than the spark discharge generating voltage is generally 100 V or more, and preferably 150 V or more.

The anodization can be performed, for example, by increasing the voltage to the above spark discharge generating voltage at a constant rate, and applying a constant voltage for a certain period of time at a voltage equal to or higher than the spark discharge generating voltage. The rate of increasing the voltage to the spark discharge generating voltage is generally 0.01 to 1 v/sec, preferably 0.05 to 0.5 v/sec, and more preferably 0.1 to 0.5 v/sec.

Moreover, the time for applying a voltage equal to or higher than the spark discharge generating voltage is generally 1 minute or more, preferably 1 to 60 minutes, and more preferably 10 to 30 minutes.

The anodization by spark discharge can also be performed by controlling the current, in place of controlling the voltage. The current density in the anodization may be 0.1 A/dm² or more, but is preferably 1 A/dm² to 10 A/dm², in terms of profitability, convenience, and performance.

According to the above method, an anatase-type titanium oxide-containing film having a film thickness of about 1 to 100 µm can be obtained.

### Step (2) of Surface Treatment Method B

In surface treatment method B, the titanium material with titanium nitride formed on the surface thereof is anodized in an electrolyte solution that does not have an etching effect on titanium (step (2)). Then, the anodized titanium material is heated in an oxidizing atmosphere, thereby forming an anatase-type titanium oxide film (step (3)).

The produced photoelectrode substrate has an anatase-type titanium oxide-containing semiconductor layer on the surface thereof, and suitably exhibits high photoelectric conversion efficiency.

The electrolyte solution preferably contains at least one acid selected from the group consisting of inorganic acids and organic acids that do not have an etching effect on titanium, or a salt compound thereof. An amorphous titanium oxide film can be formed on the surface of the titanium material with titanium nitride formed on the surface thereof, by anodizing the titanium material in an electrolyte solution that does not have an etching effect on titanium.

The electrolyte solution that does not have an etching effect on titanium is preferably an electrolyte solution containing at least one compound selected from the group consisting of inorganic acids, organic acids, and salts thereof (hereafter also referred to as "an inorganic acid or the like").

The electrolyte solution containing an inorganic acid or the like is preferably a dilute aqueous solution of phosphoric acid, phosphate, or the like.

Only performing step (2) of anodization in surface treatment method B does not generate spark discharges, and crystalline titanium oxide, such as anatase-type titanium oxide, is not generally formed.

Anatase-type titanium oxide can be formed from amorphous titanium oxide in the subsequent heat treatment step under an oxidizing atmosphere. Therefore, because an amorphous titanium oxide film is effectively formed on the surface of the titanium material, it is preferable to anodize the titanium material with titanium nitride formed on the surface thereof.

The electrolyte solution that does not have an etching effect on titanium is preferably an electrolyte solution containing at least one compound (inorganic acid, etc.) selected from the group consisting of inorganic acids (phosphoric acid, etc.), organic acids, and salts thereof (phosphate, etc.).

The inorganic acid that does not have an etching effect on titanium is preferably phosphoric acid, carbonic acid, or the like, in terms of convenience, profitability, safety, etc. The organic acid that does not have an etching effect on titanium is preferably acetic acid, adipic acid, lactic acid, or the like.

Salts of these acids, such as sodium dihydrogenphosphate, disodium hydrogenphosphate, sodium hydrogencarbonate, sodium acetate, potassium adipate, and sodium lactate, can also be used.

In addition, it is preferable to use an electrolyte solution containing an electrolyte, such as sodium sulfate, potassium sulfate, magnesium sulfate, sodium nitrate, potassium nitrate, magnesium nitrate, or calcium nitrate.

The electrolyte solution that does not have an etching effect on titanium is preferably an electrolyte solution containing at least one compound (inorganic acid, etc.) selected from the group consisting of inorganic acids (phosphoric acid, etc.), organic acids, and salts thereof (phosphate, etc.). The most preferable inorganic acids, etc., are phosphoric acid and phosphate.

The electrolyte solution is preferably a dilute aqueous solution of an inorganic acid or the like. The concentration of the inorganic acid or the like in the electrolyte solution is preferably about 1 wt.%, in terms of profitability, etc.

For example, in an electrolyte solution containing phosphoric acid, the concentration of the phosphoric acid is preferably about 0.01 to 10 wt.%, more preferably about 0.1 to 10 wt.%, and even more preferably about 1 to 3 wt.%.

These acids may be used singly, or in a combination of any two or more regardless of whether they are organic acids or inorganic acids. A preferable embodiment of an electrolyte solution containing two or more acids is, for example, an aqueous solution containing phosphate and phosphoric acid.

Although the proportion of the acids in this electrolyte solution varies depending on the type of acid and acid salt used, anodization conditions, and other conditions, the total amount of the acids is generally 0.01 to 10 wt.%, preferably 0.1 to 10 wt.%, and more preferably 1 to 3 wt.%.

The titanium material with titanium nitride formed on the surface thereof obtained in the step of forming titanium nitride is immersed in a dilute electrolyte solution containing an inorganic acid or the like that does not have an etching effect on titanium.

Subsequently, anodization is performed by preferably applying a voltage of about 10 to 300 V. It is more preferable to perform anodization at a voltage of about 50 to 300 V, and even more preferably about 50 to 200 V.

The anodization treatment temperature is preferably about 0 to 80°C, in terms of convenience, profitability, safety, etc. It is more preferable to perform anodization at a temperature of about 10 to 50°C, and even more preferably about 20 to 30°C.

The anodization treatment time is preferably about 1 second to 1 hour. It is more preferable to perform anodization for about 10 seconds to 30 minutes, and even more preferably about 5 minutes to 20 minutes.

### Step (3) of Surface Treatment Method B

Next, the titanium material with a titanium oxide film formed on the surface thereof is heated in an oxidizing atmosphere, thereby forming an anatase-type titanium oxide film (Step (3)).

When the metal titanium material, etc., is only heated in an oxidizing atmosphere, rutile-type titanium dioxide is formed, but anatase-type titanium oxide is not sufficiently formed.

The titanium material with titanium nitride formed thereon and with a titanium oxide film (amorphous titanium oxide film) formed thereon (titanium material after anodization) is heated in an oxidizing atmosphere (air oxidation treatment, etc.), thereby forming an anatase-type titanium oxide film, which has excellent photoelectric conversion characteristics among crystalline titanium oxides. As a result, the titanium material after heat treatment has excellent photoelectric conversion characteristics.

The oxidizing atmosphere in which heat treatment is performed may be selected from an air oxidizing atmosphere, an atmosphere of a mixture of oxygen gas and nitrogen gas having any oxygen concentration, an oxygen gas atmosphere, and the like; however, heat treatment in an air oxidizing atmosphere is preferred in terms of convenience, profitability, safety, etc.

The temperature of the heat treatment in an oxidizing atmosphere is preferably about 300°C or more, because of the efficient conversion from amorphous titanium oxide to anatase-type titanium oxide. The temperature of the heat treatment in an oxidizing atmosphere is preferably about 800°C or less, in order to prevent a phase transition from anatase-type titanium oxide to rutile-type titanium dioxide.

This is because the photoelectric conversion characteristics of rutile-type titanium dioxide are inferior to those of anatase-type titanium oxide. The temperature of the heat treatment in an oxidizing atmosphere is more preferably about 300 to 800°C, even more preferably about 300 to 700°C, and particularly preferably about 400 to 700°C.

The reaction pressure of the heat treatment is about 0.01 to 10 MPa, preferably about 0.01 to 5 MPa, and more preferably about 0.1 to 1 MPa.

The heating time of the heat treatment is preferably about 1 minute to 12 hours, more preferably about 10 minutes to 8 hours, and even more preferably about 1 to 6 hours.

The crystalline titanium oxide film is preferably an anatase-type titanium oxide film. Open-voltage values are improved by using anatase-type titanium oxide, rather than rutile-type titanium dioxide, in a photoelectrode of a dye-sensitized solar cell; thus, the photoelectric conversion characteristics are also high.

The heat treatment after the anodization of the present invention results in the formation of a film containing a large amount of anatase-type titanium oxide having high photoelectric conversion characteristics.

The heat treatment allows the production of photoelectric conversion element materials in which a large amount of highly active anatase-type titanium oxide is formed on the surface of the titanium materials. The materials can also be used as photoelectric conversion element materials that achieve high photoelectric conversion efficiency.

According to the above method, an anatase-type titanium oxide-containing film having a film thickness of about 1 to 100 µm can be obtained.

An excellent photoelectric conversion element material can be produced by forming titanium nitride on the surface of a titanium material, and incorporating, after the formation of titanium nitride and before the heat treatment in an oxidizing atmosphere, the step of performing anodization in an electrolyte solution, such as a dilute aqueous acid solution of phosphoric acid or the like that does not have an etching effect on titanium, or an aqueous solution of a salt of phosphoric acid or the like.

Due to the anatase-type titanium oxide (film) formed on their surface, the titanium materials can be used as photoelectric conversion element materials, such as photoelectrode substrates, of dye-sensitized solar cells, which have been attracting attention as next-generation solar cells.

### Blocking Layer

The photoelectric conversion efficiency of the dye-sensitized solar cell of the present invention can be significantly improved by forming the photoelectrode substrate from a titanium material, and further providing a blocking layer.

The blocking layer can not only prevent leakage of electrons to the electrolyte solution layer at the interface of the photoelectrode and the photoelectrode substrate when the electrons are transferred to the photoelectrode substrate, but also suppress the reunion of the electrons with the dye sensitizing agent in an oxidation state to thereby prevent the reverse transfer of electrons. Consequently, the photoelectric conversion efficiency of the dye-sensitized solar cell can be significantly increased.

The blocking layer is preferably an n-type semiconductor.

It is preferable that the blocking layer be at least one material layer selected from the group consisting of a layer of titanium oxide, a layer of aluminium oxide, a layer of silicon oxide, a layer of zirconium oxide, a layer of strontium titanate, a layer of magnesium oxide, and a layer of niobium oxide.

Because at least one material is selected from these materials and finely coated on the photoelectrode substrate, reverse electron transfer in the dye-sensitized solar cell can be prevented, and the photoelectric conversion efficiency can be significantly improved.

The blocking layer can be formed by coating titanium oxide, aluminium oxide, silicon oxide, zirconium oxide, strontium titanate, magnesium oxide, niobium oxide, or the like on the photoelectrode substrate (titanium material).

A coating method is such that a solution containing a precursor of the blocking layer, such as a titanium compound (e.g., titanium tetrachloride), an aluminium compound (e.g., aluminium chloride), a silicon compound, a zirconium compound, a strontium titanate compound, a magnesium compound, or a niobium compound (e.g., niobium chloride), is coated on the photoelectrode substrate by a method such as spin coating, dip coating, squeegee coating, screen printing, or spraying.

Then, it is preferable to perform heat treatment (e.g., firing at about 450°C).

The blocking layer can be formed by PVD treatment or CVD treatment, such as sputtering, ion plating, vacuum deposition, or electron-beam deposition, of a material, such as a titanium compound, an aluminium compound, a silicon compound, a zirconium compound, a strontium titanate compound, a magnesium compound, or a niobium compound.

A fine blocking layer can be thereby easily formed on the titanium material, which is a photoelectrode substrate.

It is more preferable that the blocking layer comprise at least two layers (a two-layer structure or a three-layer structure) selected from the group consisting of a layer of titanium oxide, a layer of aluminium oxide, a layer of silicon oxide, a layer of zirconium oxide, a layer of strontium titanate, a layer of magnesium oxide, and a layer of niobium oxide.

It is more preferable that the blocking layer comprise at least two layers (a two-layer structure or a three-layer structure) selected from the group consisting of a layer of titanium oxide, a layer of aluminium oxide, and a layer of niobium oxide.

The film thickness of the blocking layer can be changed depending on the type of substance and the coating method. The film thickness of the blocking layer is preferably about 0.1 nm to 10 µm, and more preferably about 1 nm to 1 µm.

It is preferable that a blocking layer having a two-layer structure comprise a layer of aluminium oxide as the lower layer (titanium material side) and a layer of titanium oxide as the upper layer (electrolyte layer or porous titanium oxide side).

It is preferable that a blocking layer having a two-layer structure comprise a layer of niobium oxide as the lower layer (titanium material side), and a layer of titanium oxide as the upper layer (electrolyte layer or porous titanium oxide side).

It is preferable that a blocking layer having a three-layer structure comprise a layer of aluminium oxide as the lower layer (titanium material side), a layer of niobium oxide as the intermediate layer, and a layer of titanium oxide as the upper layer (electrolyte layer or porous titanium oxide side).

It is preferable that the dye-sensitized solar cell of the present invention be a dye-sensitized solar cell in which a photoelectrode and a counter electrode are disposed opposite to each other via an electrolyte layer;
(1) the photoelectrode comprising a titanium material, a blocking layer formed on the titanium material, and a porous titanium oxide layer containing a dye sensitizing agent formed on the blocking layer, and
(2) the counter electrode comprising a transparent conductive glass or transparent conductive film coated with an electrochemical-reduction catalyst layer;
wherein the blocking layer comprises at least two layers selected from the group consisting of a layer of titanium oxide, a layer of aluminium oxide, a layer of silicon oxide, a layer of zirconium oxide, a layer of strontium titanate, a layer of magnesium oxide, and a layer of niobium oxide, and
a layer of aluminium oxide is always formed on the titanium material (on the titanium material side) of the blocking layer.

For example, a blocking layer (two-layer structure) formed in Example 2, described later, comprises aluminium oxide on a titanium material (lower layer, titanium material side), and titanium oxide as an upper layer (electrolyte layer or porous titanium oxide side).

Thereby, in a preferable embodiment of the dye-sensitized solar cell of the present invention, the blocking layer has a structure of two or more layers, and always contains a layer of aluminium oxide on the titanium material.

In a preferable embodiment, the blocking layer of the dye-sensitized solar cell comprises at least two layers selected from the group consisting of a layer of titanium oxide, a layer of aluminium oxide, and a layer of niobium oxide.

### Porous Titanium Oxide Layer

In the photoelectrode, a porous titanium oxide layer (semiconductor layer) containing a dye sensitizing agent is formed on a titanium material (a material selected from the group consisting of metal titanium, titanium alloys, surface-treated metal titanium, and surface-treated titanium alloys).

The titanium oxide layer is porous.

The semiconductor layer may be formed as an anatase-type titanium oxide film prepared by the above surface treatment method A or B. Further, a porous titanium oxide layer can be formed by the step of performing heat treatment under an oxidizing atmosphere after applying a paste agent containing particles of titanium oxide.

When UV ozone treatment or the like is performed before the application of the paste agent containing particles of titanium oxide, etc., the wettability of the photoelectrode substrate is improved, and an excellent titanium oxide layer is formed.

The average particle diameter of titanium oxide particles is preferably about 0.1 to 3,000 nm, more preferably about 1 to 1,000 nm, and even more preferably about 10 to 500 nm.

It is not necessary to use a single titanium oxide particle powder, and a mixture of a powder having a small particle size and a powder having a large particle size allows light to be scattered in the titanium oxide layer; thus, the photoelectric conversion efficiency of the obtained dye-sensitized solar cell can be improved.

The paste agent is prepared by, for example, dispersing titanium oxide particles in a solvent. The solvent is preferably polyethylene glycol. The content of titanium oxide particles in the paste agent is not particularly limited, and may be appropriately adjusted so that a sintered body is suitably formed.

The method for applying a paste agent to the titanium material is not particularly limited. For example, screen printing, inkjet printing, roll coating, doctor blading, spray coating, etc., can be used.

The thickness of the coating film after applying the paste agent is not particularly limited, and may be suitably determined so that a titanium oxide sintered body having a desired thickness is formed.

The porous titanium oxide layer is preferably applied in a rectangular shape. The titanium oxide layer applied in a rectangular shape, rather than a square shape, improves photoelectric conversion efficiency, without disappearance of electrons generated due to light excitation of the dye sensitizing agent in the titanium oxide layer.

When the photoelectrode substrate is a surface-treated metal titanium material or titanium alloy material, a laminate of the titanium oxide sintered body and the titanium oxide film is obtained as the porous titanium oxide layer.

The temperature of the heat treatment is preferably about 100 to 600°C, and more preferably about 400 to 500°C. In particular, the titanium oxide particles can be suitably sintered together by heat treatment at a temperature of about 400 to 500°C.

The time of the heat treatment may be suitably determined depending on the heat treatment temperature, etc. The heat treatment is performed in an oxidizing atmosphere (in an atmosphere in which oxygen is present; e.g., in the air).

### Dye Sensitizing Agent

In the photoelectrode, a titanium oxide layer containing a dye sensitizing agent is formed on a titanium material.

The photoelectrode on which a titanium oxide layer (semiconductor layer) is formed by the above method is immersed in a solution containing a dye sensitizing agent, thereby allowing the dye sensitizing agent to be adsorbed to the titanium oxide layer.

It is preferable to perform UV ozone treatment, etc., before immersion in the dye sensitizing agent, because the dye sensitizing agent is more easily adsorbed to the titanium oxide layer of the dye-sensitized solar cell.

The dye sensitizing agent is not particularly limited, as long as it is dye that can absorb light in the near-infrared light region and the visible light region. Preferred dye sensitizing agents are ruthenium metal complexes, such as red dye (N719) and black dye (N749); metal complexes other than ruthenium, such as copper phthalocyanine; organic complexes, such as eosine, rhodamine, merocyanine, and indoline; and the like.

These dye sensitizing agents can be used singly or in a combination of two or more. Among the dye sensitizing agents, ruthenium complexes are preferred, and a mixture of red dye (N719) and black dye (N749), which can absorb light in the near-infrared light region, is more preferred.

The dye sensitizing agent can be adsorbed to the titanium oxide layer by, for example, immersing the semiconductor layer, such as a titanium oxide layer, in a solution containing the dye sensitizing agent. The dye sensitizing agent can be attached to the semiconductor layer by chemical adsorption, physical adsorption, or deposition.

The amount of dye sensitizing agent attached may be suitably determined depending on the area of the semiconductor layer, etc., within a range that does not impair the effect of the present invention.

### (2) Counter Electrode

The counter electrode of the dye-sensitized solar cell preferably comprises a transparent conductive glass or transparent conductive film coated with an electrochemical-reduction catalyst layer.

The transparent conductive glass or transparent conductive film is obtained by coating a transparent conductive film, such as ITO (indium tin oxide) or FTO (fluorine tin oxide), onto transparent glass or a transparent plastic material, such as PET (polyethylene terephthalate) or PEN (polyethylene naphthalate).

A counter electrode in which an electrochemical-reduction catalyst layer is coated on the surface of transparent conductive glass or a transparent conductive film on the electrolyte side by PVD treatment, such as electron-beam deposition or sputtering, is used.

The electrochemical-reduction catalyst layer may be a platinum catalyst layer, a carbon layer, a poly(3,4-ethylenedioxythiophene) (PEDOT) layer, a gold layer, a silver layer, a copper layer, an aluminum layer, a rhodium layer, an indium layer, or the like.

The electrochemical-reduction catalyst layer is preferably a platinum catalyst layer because, for example, hydrogen overvoltage is low and electrons are easily injected into the electrolyte that has lost electrons in the electrolyte layer.

Since the photoelectrode of the present invention is made of a titanium material that does not transmit light, light is irradiated from the counter electrode side.

### (3) Electrolyte Layer

The electrolyte layer may be a layer that can be excited by light, supply electrons to the dye sensitizing agent achieving electron injection into the semiconductor layer, and reduce the dye sensitizing agent. The electrolyte layer may also be a layer in which electrons are supplied from the platinum catalyst layer of the counter electrode to the electrolyte that has lost electrons.

A liquid electrolyte layer is, for example, a nonaqueous electrolyte solution containing a redox species. Preferred examples of the redox species include a combination of iodine and an iodide salt, such as lithium iodide, sodium iodide, potassium iodide, or calcium iodide; and a combination of bromine and a bromide salt, such as lithium bromide, sodium bromide, potassium bromide, or calcium bromide. These may be used singly or in a combination of two or more.

Further, DMPII (1,2-dimethyl-3-propylimidazolium iodide), TBP (tert-butylpyridine), etc., may be added.

Examples of the solvent include acetonitrile, 3-methoxy propionitrile, ethylene carbonate, propione carbonate, γ-butyrolactone, and the like. These solvents may be used singly or in a combination of two or more.

In the dye-sensitized solar cell of the present invention, the dye adsorbed to the titanium oxide layer on the photoelectrode is irradiated with light via a light-concentrating device, the counter electrode material, and the electrolyte solution layer to excite the dye by the light; thus, the electrolyte solution layer is required to have high light transparency.

The thickness of the electrolyte layer, that is, the distance between the photoelectrode and the counter electrode, is preferably 25 to 100 µm, and more preferably 25 to 50 µm.

### (4) Separator (Spacer) and Sealing Material

In the dye-sensitized solar cell, a separator (spacer) is preferably disposed so as to prevent contact between the photoelectrode and the counter electrode.

The thickness of the separator (spacer) disposed between the photoelectrode and the counter electrode determines the thickness of the electrolyte solution layer. In the dye-sensitized solar cell of the present invention, as the thickness of the electrolyte solution layer is thinner, the dye adsorbed to the titanium oxide layer on the photoelectrode is more irradiated with light via a light-concentrating device, the counter electrode material, and the electrolyte solution layer to excite the dye by the light; thus, the electrolyte solution layer is required to have high light transparency, and the thickness of the electrolyte solution layer is preferably thin.

A separator (spacer) that is too thin allows contact between the photoelectrode and the counter electrode. The thickness of the separator (spacer) is preferably 25 to 100 µm, and more preferably 25 to 50 µm.

As the separator, a known separator generally used in the field of cells can be used. The separator may be an ionomer resin film, polyimide resin film, UV-cured acrylic resin, glass material, silane-modified polymer, polyimide tape, or the like.

The area of the separator is not particularly limited, and may be suitably determined depending on the scale of the target solar cell, etc.

Examples of the sealing material include UV-cured acrylic resin, ionomer resin films, epoxy resin, polyester resin, acrylic resin, hot melt resin, silicone elastomers, butyl rubber elastomers, glass materials, and the like.

TB3017B or TB3035B (produced by ThreeBond) can be used as the UV-cured acrylic resin.

The sealing material can seal the gap between the photoelectrode and the counter electrode.

### (5) Method for Producing Dye-Sensitized Solar Cell

The dye-sensitized solar cell of the present invention can be produced by a known method.

For example, a photoelectrode and a counter electrode are disposed opposite to each other via a spacer, and an electrolyte layer is sealed between the photoelectrode and the counter electrode. The method for sealing the electrolyte layer is not limited. For example, after the counter electrode is laminated on the semiconductor layer side of the photoelectrode, an inlet is provided, and a material constituting the electrolyte layer is injected through the inlet.

The inlet may be sealed with a predetermined member or resin after the injection of the material is completed.

Moreover, when the electrolyte layer is a gel, it may be liquefied by heating when the above material is injected. When the electrolyte layer is solid, for example, a solution in which the solid electrolyte is dissolved is prepared using a solvent that can dissolve the solid electrolyte, the solution is injected into the inlet, and the solvent is then removed.

The dye-sensitized solar cell of the present invention is a next-generation solar cell with high photoelectric conversion efficiency. The dye-sensitized solar cell of the present invention can have a module form comprising a plurality of cells.

Fig. 1 is a schematic view (cross-sectional view) showing one embodiment of the dye-sensitized solar cell of the present invention.

### Technical Feature of the Present Invention

In the dye-sensitized solar cell, an electrolyte layer (electrolyte solution) is present between the photoelectrode and the counter electrode.

Excited electrons generated from the photo-absorbed dye move to the photoelectrode substrate through the porous titanium oxide layer to which the dye is adsorbed. The excited electrons then move to the counter electrode via an external circuit. The excited electrons moved to the counter electrode reduce the electrolyte solution. In contrast, the dye, which has released electrons and been in an oxidation state, oxidizes the electrolyte solution.

The dye-sensitized solar cell generates electricity by repeating this series of flow.

In this case, when moving to the photoelectrode substrate, the excited electrons generated from the dye may recombine with the dye in an oxidation state, or undergo reverse transfer from the surface of the photoelectrode substrate in contact with the electrolyte solution to the electrolyte solution side. This may reduce the photoelectric conversion efficiency of the dye-sensitized solar cell.

Techniques to form a block layer on the photoelectrode substrate in dye-sensitized solar cells have been proposed, in order to suppress reverse electron transfer from the surface of the photoelectrode substrate in contact with the electrolyte solution to the electrolyte solution side, and to increase the photoelectric conversion efficiency. However, the degree of increase in photoelectric conversion efficiency was low in conventional dye-sensitized solar cells.

The photoelectric conversion efficiency of the dye-sensitized solar cell of the present invention is increased from that of conventional dye-sensitized solar cells.

In a preferable embodiment, the dye-sensitized solar cell of the present invention has a technical feature, i.e., a specific blocking layer satisfying the following requirements:
(i) when the photoelectrode comprises a titanium material, a blocking layer formed on the titanium material, and a porous titanium oxide layer containing a dye sensitizing agent formed on the blocking layer,
(ii) the blocking layer comprises at least two layers selected from the group consisting of a layer of titanium oxide, a layer of aluminium oxide, a layer of silicon oxide, a layer of zirconium oxide, a layer of strontium titanate, a layer of magnesium oxide, and a layer of niobium oxide, and
(iii) a layer of aluminium oxide is always formed on the titanium material (on the titanium material side) of the blocking layer.

The dye-sensitized solar cell of the present invention can realize high photoelectric conversion efficiency because the above specific blocking layer is provided. The blocking layer can prevent leakage of electrons to the electrolyte solution layer at the interface of the photoelectrode and the photoelectrode substrate, and suppress the reunion of the electrons with the dye sensitizing agent.

Consequently, in the process of moving to the photoelectrode substrate through the porous titanium oxide layer to which the dye is adsorbed, the excited electrons generated from the dye neither recombine with the dye in an oxidation state, nor undergo reverse transfer from the surface of the photoelectrode substrate in contact with the electrolyte solution to the electrolyte solution side.

The dye-sensitized solar cell of the present invention can realize high photoelectric conversion efficiency because the specific blocking layer is provided.

### Examples

The present invention is described below with reference to Examples; however, the present invention is not limited to these Examples.

### (a) Example 1

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure).

Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

### (2) Production of Photoelectrode

A dye-sensitized solar cell was produced using the above surface-treated metal titanium plate (9 mm x 50 mm) as a photoelectrode. First, the surface-treated metal titanium plate was washed with a solvent (ethanol) and then dried. Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

### Blocking Layer (Titanium Oxide)

Thereafter, the plate was immersed in titanium tetrachloride TiCl₄ (produced by Wako Pure Chemical Industries, Ltd.) aqueous solutions with various concentrations at 70°C for 30 minutes and then dried, followed by firing at 450°C for 15 minutes, thereby forming a blocking layer (fine layer) comprising titanium oxide on the titanium material.

After this treatment, the surface-treated material was coated with a titanium oxide material (PST-18NR, produced by JGC Catalysts and Chemicals Ltd.) by a squeegee method so that the coated area was 0.4 cm² (1 mm x 40 mm), followed by firing at 450°C for 15 minutes. This material was coated 5 times so that the film thickness was 15 µm (semiconductor layer, (porous) titanium oxide layer), followed by firing at 450°C for 1 hour.

Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution.

The mixing ratio of t-BtOH to CH₃CN in the mixture was 1:1.

The metal titanium plate after firing was immersed in the dye solution at 40°C for 14 hours, thereby forming a (porous) titanium oxide layer containing a dye sensitizing agent. Thus, a photoelectrode material was obtained.

The surface-treated metal titanium was ground with a precision grinder (AC-D12, produced by Sunhayato Corp.) to thereby provide a collecting part.

### (3) Production of Counter Electrode Plate

The counter electrode used was obtained by washing an FTO (fluorine tin oxide)-deposited (coated) glass plate (produced by Asahi Glass Co., Ltd.) (transparent conductive glass) with solvents (acetone and ethanol), and drying the plate, followed by electron-beam deposition of 1-nm platinum (electrochemical-reduction catalyst layer).

A terminal part was provided by coating Special Solder Cerasolzer #186 (produced by Kuroda Techno Co., Ltd.).

### (4) Production of Dye-Sensitized Solar Cell

A 30-µm-thick ionomer resin spacer (Himilan, produced by DuPont-Mitsui Polychemicals Co., Ltd.) was placed in the gap between the photoelectrode and the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile (produced by Wako Pure Chemical Industries, Ltd.) to prepare an electrolyte solution.

The prepared electrolyte solution was placed in the gap between the photoelectrode and the counter electrode (electrolyte layer).

Subsequently, the gap between both electrodes was sealed with a UV-cured acrylic resin (TB3035B, sealing material, produced by ThreeBond). The sealing material was cured by using a conveyor-type UV irradiation apparatus (VB-15201BY-A, produced by Ushio Inc.) with an integrated intensity of 40 kJ/m². Thus, dye-sensitized solar cells were produced.

### (5) Evaluation Results

Table 1 shows the results of examining the photoelectric conversion efficiency of the dye-sensitized solar cells using titanium oxide as a blocking layer.

**Table 1**

| Table 1 | | | | |
|---|---|---|---|---|
| TiCl₄ concentration (mM) | Short-circuit current density (mA/cm²) | Open voltage (V) | Fill factor | Photoelectric conversion efficiency (%) |
| None (no blocking layer) | 17.26 | 0.741 | 0.572 | 7.33 |
| 20 | 19.40 | 0.705 | 0.627 | 8.57 |
| 40 | 20.49 | 0.735 | 0.614 | 9.25 |
| 80 | 20.14 | 0.728 | 0.621 | 9.11 |
| 120 | 20.15 | 0.719 | 0.620 | 8.97 |

The above results indicate that the short-circuit current density and fill factor were improved, and the photoelectric conversion efficiency was increased, due to the formation of a blocking layer using titanium oxide.

### (b) Example 2

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure).

Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

### (2) Production of Photoelectrode

A dye-sensitized solar cell was produced using the above surface-treated metal titanium plate (9 mm x 50 mm) as a photoelectrode. First, the surface-treated metal titanium plate was washed with a solvent (ethanol) and dried.

Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

### Blocking Layer (Lower Layer: Aluminium Oxide, Upper Layer: Titanium Oxide)

Thereafter, the plate was immersed in a 50-mM aluminium chloride AlCl₃ (produced by Wako Pure Chemical Industries, Ltd.) aqueous solution at room temperature for 2 minutes and then dried, followed by firing at 450°C for 15 minutes.

Next, the plate was immersed in a 40-mM titanium tetrachloride TiCl₄ (produced by Wako Pure Chemical Industries, Ltd.) aqueous solution at 70°C for 30 minutes and then dried, followed by firing at 450°C for 15 minutes.

The treatment with AlCl₃ and TiCl₄ resulted in the formation of a blocking layer (two-layer structure, fine layer) comprising aluminum oxide as a lower layer (titanium material side), and titanium oxide as an upper layer (electrolyte layer or porous titanium oxide side), on the titanium material.

After this treatment, the surface-treated material was coated with a titanium oxide material (PST-18NR, produced by JGC Catalysts and Chemicals Ltd.) by a squeegee method so that the coated area was 0.4 cm² (1 mm x 40 mm), followed by firing at 450°C for 15 minutes. This material was coated 5 times so that the film thickness was 15 µm (semiconductor layer, (porous) titanium oxide layer), followed by firing at 450°C for 1 hour.

Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution.

The mixing ratio of t-BtOH to CH₃CN in the mixture was 1:1.

The metal titanium plate after firing was immersed in the dye solution at 40°C for 14 hours, thereby forming a (porous) titanium oxide layer containing a dye sensitizing agent. Thus, a photoelectrode material was obtained.

The surface-treated metal titanium was ground with a precision grinder (AC-D12, produced by Sunhayato Corp.) to thereby provide a collecting part.

### (3) Production of Counter Electrode Plate

The counter electrode used was obtained by washing an FTO (fluorine tin oxide)-deposited (coated) glass plate (produced by Asahi Glass Co., Ltd.) (transparent conductive glass) with solvents (acetone and ethanol), and drying the plate, followed by electron-beam deposition of 1-nm platinum (electrochemical-reduction catalyst layer).

A terminal part was provided by coating Special Solder Cerasolzer #186 (produced by Kuroda Techno Co., Ltd.).

### (4) Production of Dye-Sensitized Solar Cell

A 30-µm-thick ionomer resin spacer (Himilan, produced by DuPont-Mitsui Polychemicals Co., Ltd.) was placed in the gap between the photoelectrode and the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile (produced by Wako Pure Chemical Industries, Ltd.) to prepare an electrolyte solution.

The prepared electrolyte solution was placed in the gap between the photoelectrode and the counter electrode (electrolyte layer).

Subsequently, the gap between both electrodes was sealed with a UV-cured acrylic resin (TB3035B, sealing material, produced by ThreeBond). The sealing material was cured by using a conveyor-type UV irradiation apparatus (VB-15201BY-A, produced by Ushio Inc.) with an integrated intensity of 40 kJ/m². Thus, dye-sensitized solar cells were produced.

### (5) Evaluation Results

Table 2 shows the results of examining the photoelectric conversion efficiency of the dye-sensitized solar cells using aluminum oxide as a lower layer of a blocking layer, and titanium oxide as an upper layer of the blocking layer.

**Table 2**

| Table 2 | | | | |
|---|---|---|---|---|
| Presence of blocking layer | Short-circuit current density (mA/cm²) | Open Voltage (V) | Fill factor | Photoelectric conversion efficiency (%) |
| Not formed | 16.97 | 0.709 | 0.619 | 7.46 |
| Formed | 21.15 | 0.730 | 0.647 | 9.98 |

The above results indicate that all of the photoelectric conversion characteristics, i.e., short-circuit current density, open voltage, and fill factor, were improved, and the photoelectric conversion efficiency was significantly increased from 7.46% to 9.98%, due to the formation of a blocking layer comprising aluminum oxide as a lower layer, and titanium oxide.

### (c) Example 3

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure).

Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

### (2) Production of Photoelectrode

A dye-sensitized solar cell was produced using the above surface-treated metal titanium plate (9 mm x 50 mm) as a photoelectrode. First, the surface-treated metal titanium plate was washed with a solvent (ethanol) and dried.

Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

### Blocking Layer (Lower Layer: Aluminium Oxide, Upper Layer: Titanium Oxide)

Thereafter, the plate was immersed in a 150-mM aluminium chloride AlCl₃ (produced by Wako Pure Chemical Industries, Ltd.) aqueous solution, which had a concentration 3 times higher than that of Example 2, at room temperature for 2 minutes and then dried, followed by firing at 450°C for 15 minutes. This process was repeated twice.

Next, the plate was immersed in a 120-mM titanium tetrachloride TiCl₄ (produced by Wako Pure Chemical Industries, Ltd.) aqueous solution at 70°C for 30 minutes and then dried, followed by firing at 450°C for 15 minutes. This process was repeated twice.

The treatment with AlCl₃ and TiCl₄ resulted in the formation of a blocking layer (two-layer structure) comprising aluminum oxide as a lower layer (titanium material side), and titanium oxide as an upper layer (electrolyte layer or porous titanium oxide side), on the titanium material.

After this treatment, the surface-treated material was coated with a titanium oxide material (PST-18NR, produced by JGC Catalysts and Chemicals Ltd.) by a squeegee method so that the coated area was 0.4 cm² (1 mm x 40 mm), followed by firing at 450°C for 15 minutes. This material was coated 5 times so that the film thickness was 15 µm (semiconductor layer, (porous) titanium oxide layer), followed by firing at 450°C for 1 hour.

Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution.

The mixing ratio of t-BtOH to CH₃CN in the mixture was 1:1.

The metal titanium plate after firing was immersed in the dye solution at 40°C for 14 hours, thereby forming a (porous) titanium oxide layer containing a dye sensitizing agent. Thus, a photoelectrode material was obtained.

The surface-treated metal titanium was ground with a precision grinder (AC-D12, produced by Sunhayato Corp.) to thereby provide a collecting part.

### (3) Production of Counter Electrode Plate

The counter electrode used was obtained by washing an FTO (fluorine tin oxide)-deposited (coated) glass plate (produced by Asahi Glass Co., Ltd.) (transparent conductive glass) with solvents (acetone and ethanol), and drying the plate, followed by electron-beam deposition of 1-nm platinum (electrochemical-reduction catalyst layer).

A terminal part was provided by coating Special Solder Cerasolzer #186 (produced by Kuroda Techno Co., Ltd.).

### (4) Production of Dye-Sensitized Solar Cell

A 30-µm-thick ionomer resin spacer (Himilan, produced by DuPont-Mitsui Polychemicals Co., Ltd.) was placed in the gap between the photoelectrode and the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile (produced by Wako Pure Chemical Industries, Ltd.) to prepare an electrolyte solution.

The prepared electrolyte solution was placed in the gap between the photoelectrode and the counter electrode (electrolyte layer).

Subsequently, the gap between both electrodes was sealed with a UV-cured acrylic resin (TB3035B, sealing material, produced by ThreeBond). The sealing material was cured by using a conveyor-type UV irradiation apparatus (VB-15201BY-A, produced by Ushio Inc.) with an integrated intensity of 40 kJ/m². Thus, dye-sensitized solar cells were produced.

### (5) Evaluation Results

Table 3 shows the results of examining the photoelectric conversion efficiency of the dye-sensitized solar cells using aluminum oxide as a lower layer of a blocking layer, and titanium oxide as an upper layer thereof.

**Table 3**

| Table 3 | | | | |
|---|---|---|---|---|
| Presence of blocking layer | Short-circuit current density (mA/cm²) | Open voltage (V) | Fill factor | Photoelectric conversion efficiency (%) |
| Not formed | 15.82 | 0.697 | 0.703 | 7.75 |
| Formed | 33.23 | 0.759 | 0.660 | 16.77 |

The above results indicate that the short-circuit current density was significantly improved, and the photoelectric conversion efficiency was remarkably increased twice or more from 7.75% to 16.77%, due to the formation of a blocking layer comprising thick aluminum oxide as a lower layer, and thick titanium oxide.

### (d) Example 4

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure).

Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

### (2) Production of Photoelectrode

A dye-sensitized solar cell was produced using the above surface-treated metal titanium plate (9 mm x 50 mm) as a photoelectrode. First, the surface-treated metal titanium plate was washed with a solvent (ethanol) and dried.

Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

### Blocking Layer

Thereafter, the following four blocking layers were formed on the above surface-treated metal titanium plates.

### (A) Blocking Layer (Titanium Oxide)

The plate was immersed in a 40-mM titanium tetrachloride TiCl₄ (produced by Wako Pure Chemical Industries, Ltd.) aqueous solution at 70°C for 30 minutes and then dried, followed by firing at 450°C for 15 minutes, thereby forming a blocking layer of titanium oxide on the titanium material.

### (B) Blocking Layer (Niobium Oxide)

The plate was immersed in a 10-mM niobium chloride NbCl₅ (produced by Wako Pure Chemical Industries, Ltd.) aqueous solution at 70°C for 30 minutes and then dried, followed by firing at 450°C for 15 minutes, thereby forming a blocking layer of niobium oxide on the titanium material.

### (C) Blocking Layer (Lower Layer: Niobium Oxide, Upper Layer: Titanium Oxide)

The plate was immersed in a 10-mM niobium chloride NbCl₅ (produced by Wako Pure Chemical Industries, Ltd.) aqueous solution at 70°C for 30 minutes and then dried, followed by firing at 450°C for 15 minutes. This process was repeated twice.

Next, the plate was immersed in a 120-mM titanium tetrachloride TiCl₄ (produced by Wako Pure Chemical Industries, Ltd.) aqueous solution at 70°C for 30 minutes and then dried, followed by firing at 450°C for 15 minutes. This process was repeated twice.

This treatment resulted in the formation of a blocking layer (two-layer structure) comprising niobium oxide as a lower layer (titanium material side), and titanium oxide as an upper layer (electrolyte layer or porous titanium oxide side), on the titanium material.

### (D) Blocking Layer (Lower Layer: Aluminium Oxide, Intermediate Layer: Niobium Oxide, Upper Layer: Titanium Oxide)

The plate was immersed in a 150-mM aluminium chloride AlCl₃ (produced by Wako Pure Chemical Industries, Ltd.) aqueous solution at room temperature for 2 minutes and then dried, followed by firing at 450°C for 15 minutes. This process was repeated twice.

Next, the plate was immersed in a 10-mM niobium chloride NbCl₅ (produced by Wako Pure Chemical Industries, Ltd.) aqueous solution at 70°C for 30 minutes and then dried, followed by firing at 450°C for 15 minutes. This process was repeated twice.

Thereafter, the plate was immersed in a 120-mM titanium tetrachloride TiCl₄ (produced by Wako Pure Chemical Industries, Ltd.) aqueous solution at 70°C for 30 minutes and then dried, followed by firing at 450°C for 15 minutes. This process was repeated twice.

This treatment resulted in the formation of a blocking layer (three-layer structure) comprising aluminium oxide as a lower layer (titanium material side), niobium oxide as an intermediate layer, and titanium oxide as an upper layer (electrolyte layer or porous titanium oxide side), on the titanium material.

After the above treatment, the surface-treated materials were each coated with a titanium oxide material (PST-18NR, produced by JGC Catalysts and Chemicals Ltd.) by a squeegee method so that the coated area was 0.4 cm² (1 mm x 40 mm), followed by firing at 450°C for 15 minutes. This material was coated 5 times so that the film thickness was 15 µm (semiconductor layer, (porous) titanium oxide layer), followed by firing at 450°C for 1 hour.

Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution.

The mixing ratio of t-BtOH to CH₃CN in the mixture was 1:1.

The metal titanium plate after firing was immersed in the dye solution at 40°C for 14 hours. Thus, a photoelectrode material was obtained.

The surface-treated metal titanium was ground with a precision grinder (AC-D12, produced by Sunhayato Corp.) to thereby provide a collecting part.

### (3) Production of Counter Electrode Plate

The counter electrode used was obtained by washing an FTO (fluorine tin oxide)-deposited (coated) glass plate (produced by Asahi Glass Co., Ltd.) (transparent conductive glass) with solvents (acetone and ethanol), and drying the plate, followed by electron-beam deposition of 1-nm platinum (electrochemical-reduction catalyst layer).

A terminal part was provided by coating Special Solder Cerasolzer #186 (produced by Kuroda Techno Co., Ltd.).

### (4) Production of Dye-Sensitized Solar Cell

A 30-µm-thick ionomer resin spacer (Himilan, produced by DuPont-Mitsui Polychemicals Co., Ltd.) was placed in the gap between the photoelectrode and the counter electrode.

Then, 0.01 M I₂ (iodine), 0.02 M LiI (lithium iodide), 0.24 M DMPII (1,2-dimethyl-3-propylimidazolium iodide), and 1.0 M TBP (tert-butylpyridine) were dissolved in acetonitrile (produced by Wako Pure Chemical Industries, Ltd.) to prepare an electrolyte solution.

The prepared electrolyte solution was placed in the gap between the photoelectrode and the counter electrode (electrolyte layer).

Subsequently, the gap between both electrodes was sealed with a UV-cured acrylic resin (TB3035B, sealing material, produced by ThreeBond). The sealing material was cured by using a conveyor-type UV irradiation apparatus (VB-15201BY-A, produced by Ushio Inc.) with an integrated intensity of 40 kJ/m². Thus, dye-sensitized solar cells were produced.

### (5) Evaluation Results

Table 4 shows the results of examining the photoelectric conversion efficiency of the dye-sensitized solar cells comprising aluminum oxide as a lower layer of a blocking layer, and titanium oxide as an upper layer of the blocking layer.

**Table 4**

| Table 4 | | | | |
|---|---|---|---|---|
| Type of blocking layer | Short-circuit current density (mA/cm²) | Open voltage (V) | Fill factor | Photoelectric conversion efficiency (%) |
| None | 18.64 | 0.676 | 0.595 | 7.49 |
| (A) Titanium oxide | 23.29 | 0.672 | 0.606 | 9.48 |
| (B) Niobium oxide | 24.30 | 0.679 | 0.595 | 9.82 |
| (C) Titanium oxide/ niobium oxide | 34.92 | 0.754 | 0.655 | 17.24 |
| (D) Titanium oxide/ niobium oxide/ aluminum oxide | 40.19 | 0.768 | 0.644 | 19.86 |

The above results indicate that the photoelectric conversion efficiency was increased when titanium oxide and niobium oxide were each used as a blocking layer. The above results also indicate that the photoelectric conversion efficiency was significantly increased twice or more due to the formation of a blocking layer comprising two or more components.

### (e) Summary of Advantageous Effects

The dye-sensitized solar cell of the present invention has a specific blocking layer. The blocking layer can prevent leakage of electrons to the electrolyte solution layer at the interface of the photoelectrode and the photoelectrode substrate, and suppress the reunion of the electrons with the dye sensitizing agent.

Consequently, in the process of moving to the photoelectrode substrate through the porous titanium oxide layer to which the dye is adsorbed, the excited electrons generated from the dye neither recombine with the dye in an oxidation state, nor undergo reverse transfer from the surface of the photoelectrode substrate in contact with the electrolyte solution to the electrolyte solution side.

The dye-sensitized solar cell of the present invention can realize high photoelectric conversion efficiency because a specific blocking layer is provided.

### (i) Aluminum Oxide Layer Formed on Titanium Material (Side) of Blocking Layer

The dye-sensitized solar cell of the present invention can achieve high conversion efficiency when an aluminum oxide layer is provided on the titanium material (on the titanium material side) (lower layer, titanium material side) of the blocking layer, as demonstrated in Examples 2 to 4.

This is because aluminium oxide is a substance that has a large band gap (gap between the conduction band and the valence band) among the materials of the blocking layer, and that has high conduction band energy.

Electrons generated due to light excitation of the dye sensitizing agent move to the conduction band. Because the position of the conduction band of aluminium oxide is high, reverse electron transfer to the electrolyte solution side across the high wall of the conduction band is difficult.

Based on such characteristics of aluminium oxide, the photoelectric conversion efficiency of the dye-sensitized solar cell of the present invention can be increased by providing a blocking layer comprising aluminium oxide on the titanium material (on the titanium material side) of the blocking layer.

### (ii) Blocking Layer Comprising Specific Material

In the dye-sensitized solar cell of the present invention, it is preferable to use an n-type semiconductor as a blocking layer, as described above.

In addition to titanium oxide, aluminium oxide, and niobium oxide used in Examples 2 to 4, silicon oxide, zirconium oxide, strontium titanate, and magnesium oxide are also n-type semiconductors.

Accordingly, in addition to titanium oxide, aluminium oxide, and niobium oxide, silicon oxide, zirconium oxide, strontium titanate, and magnesium oxide can also function as an effective blocking layer in the dye-sensitized solar cell of the present invention.

In consideration of the Examples using a blocking layer comprising titanium oxide, aluminium oxide, and niobium oxide, and forming a layer of aluminium oxide on the titanium material (on the titanium material side) (lower layer) of the blocking layer, preferable embodiments of the dye-sensitized solar cell of the present invention using a blocking layer comprising at least two layers selected from a layer of titanium oxide, a layer of aluminium oxide, a layer of silicon oxide, a layer of zirconium oxide, a layer of strontium titanate, a layer of magnesium oxide, a layer of niobium oxide, or the like, are sufficiently supported.

### (iii) Blocking Layer Provided on Titanium Material of Photoelectrode

The dye-sensitized solar cell of the present invention comprises a photoelectrode substrate that is made of a titanium material, and that is further provided with a blocking layer.

The blocking layer prevents leakage of electrons to the electrolyte solution layer at the interface of the photoelectrode and the photoelectrode substrate (titanium material), and suppresses the reunion of the electrons with the dye sensitizing agent.

In the dye-sensitized solar cell of the present invention, due to the blocking layer, in the process of moving to the photoelectrode substrate through the porous titanium oxide layer to which the dye is adsorbed, the excited electrons generated from the dye neither recombine with the dye in an oxidation state, nor undergo reverse transfer from the surface of the photoelectrode substrate in contact with the electrolyte solution to the electrolyte solution side.

The photoelectric conversion efficiency of the dye-sensitized solar cell of the present invention is increased by providing a specific blocking layer on the photoelectrode substrate (titanium material).

### (iv) Effects Demonstrated in Examples

The effects of the dye-sensitized solar cell of the present invention are sufficiently demonstrated in the Examples of the specification (Examples 2 to 4, etc.).

In the dye-sensitized solar cell of the present invention, the photoelectric conversion characteristics, i.e., short-circuit current density, open voltage, and fill factor, are improved, and the photoelectric conversion efficiency is significantly increased, due to the formation of a blocking layer comprising aluminium oxide on the titanium material (on the titanium material side) (lower layer, titanium material side) and titanium oxide as an upper layer (two-layer structure of Examples 2 and 3), or a blocking layer comprising aluminium oxide on the titanium material (on the titanium material side), niobium oxide as an intermediate layer, and titanium oxide as an upper layer (three-layer structure of Example 4).

The Examples show that the photoelectric conversion characteristics are significantly improved by a blocking layer comprising two or more components.

The effects of the dye-sensitized solar cell of the present invention result from the combination of structural elements, i.e., a photoelectrode substrate made of a titanium material, and a specific blocking layer provided on the photoelectrode substrate. That is, the above effects are obtained by functional or interactive connection between the features of the present invention. These effects are not found in the prior art, and are considered to be advantageous effects.

### Reference Signs List

1. Photoelectrode (titanium substrate, titanium material)
2. Anodized material (anatase-type titanium oxide film)
3. Blocking layer (fine layer)
4. (Porous) titanium oxide layer containing dye sensitizing agent
5. Electrolyte solution (electrolyte layer)
6. Spacer, sealing material
7. Platinum-deposited film (electrochemical-reduction catalyst layer)
8. FTO film (transparent conductive film)
9. Counter electrode (glass or film)

## Claims

1. A dye-sensitized solar cell in which a photoelectrode and a counter electrode are disposed opposite to each other via an electrolyte layer;
(1) the photoelectrode comprising a titanium material, a blocking layer formed on the titanium material, and a porous titanium oxide layer containing a dye sensitizing agent formed on the blocking layer, and
(2) the counter electrode comprising a transparent conductive glass or transparent conductive film coated with an electrochemical-reduction catalyst layer;
wherein the blocking layer comprises at least two layers selected from the group consisting of a layer of titanium oxide, a layer of aluminium oxide, a layer of silicon oxide, a layer of zirconium oxide, a layer of strontium titanate, a layer of magnesium oxide, and a layer of niobium oxide, and
a layer of aluminium oxide is always formed on the titanium material of the blocking layer.

2. The dye-sensitized solar cell according to claim 1, wherein the titanium material is a material selected from the group consisting of metal titanium, titanium alloys, surface-treated metal titanium, and surface-treated titanium alloys.

3. The dye-sensitized solar cell according to claim 1 or 2, wherein the electrochemical-reduction catalyst layer is a platinum catalyst layer.

4. The dye-sensitized solar cell according to any one of claims 1 to 3, wherein the blocking layer comprises at least two layers selected from the group consisting of a layer of titanium oxide, a layer of aluminium oxide, and a layer of niobium oxide.

5. A method for producing the dye-sensitized solar cell according to any one of claims 1 to 4, wherein the titanium material of the photoelectrode is produced by the following surface treatment method comprising the steps of:
(1) forming titanium nitride on the surface of a metal titanium material or titanium material; and
(2) anodizing the metal titanium material or titanium alloy material with the titanium nitride formed on the surface thereof obtained in step (1) using an electrolyte solution that has an etching effect on titanium at a voltage equal to or higher than spark discharge generating voltage, thereby forming an anatase-type titanium oxide film.

6. A method for producing the dye-sensitized solar cell according to any one of claims 1 to 4, wherein the titanium material of the photoelectrode is produced by the following surface treatment method comprising the steps of:
(1) forming titanium nitride on the surface of a metal titanium material or titanium material;
(2) anodizing the metal titanium material or titanium alloy material with the titanium nitride formed on the surface thereof obtained in step (1) using an electrolyte solution that does not have an etching effect on titanium; and
(3) heating the anodized metal titanium material or titanium alloy material obtained in step (2) in an oxidizing atmosphere, thereby forming an anatase-type titanium oxide film.

7. The production method according to claim 5 or 6, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

8. The production method according to claim 7, wherein the heat treatment under a nitrogen gas atmosphere is performed in the presence of an oxygen-trapping agent.
